# EUROPEAN PATENT SPECIFICATION

(11) **EP 2 907 425 B1**
(45) Date of publication and mention of the grant of the patent: **10.10.2018**
(21) Application number: 15154496.2
(22) Date of filing: 10.02.2015
(51) Int. Cl.: A47J 31/06

(54) **MACHINE FOR MAKING AN INFUSED DRINK AND INFUSION GROUP**
Maschine zur Herstellung eines Brühgetränks und Brühgruppe
Machine permettant de préparer une boisson infusée et groupe d'infusion

(30) Priority: 14.02.2014 IT RM20140065
(43) Date of publication of application: 19.08.2015
(73) Proprietor: Scacco S.A., 6900 Lugano (CH)
(72) Inventor: Capitani, Emilio Alfredo, 6900 Lugano (CH)
(74) Representative: Fabiano, Piero

(56) References cited:
- WO-A1-2013/153526
- US-A- 5 910 205
- US-A1- 2013 133 522
- US-A1- 2013 263 423

## Description

### FIELD OF THE INVENTION

The present invention concerns infusion assemblies to make an infused beverages such as coffee, the, tisanes, chocolate, etc., from a capsule or pod containing an aromatic substance.

In particular, the present invention refers to a machine for making infused beverages and an infusion assembly designed for cooperating with the afore said machine.

### KNOWN ART

Known infusion devices for coffee machines usually comprise a first infusing member, normally named female infuser, which is cup-shaped and comprises a recess adapted to house an infusion capsule and/or pod, and contains an aromatic essence, and a second member, normally named male infuser, adapted to close the afore said recess to define an infusion chamber in conjunction with the first infusing member.

The capsule, containing the aromatic essence, is put or moved into the infusion chamber so that the aromatic essence is extracted by introducing pressurized hot water into the infusion capsule and/or pod.

The infusion chamber is communicating with at least one outlet duct for the infused beverage, ending with an outlet nozzle or hopper for the beverage.

In known machines, the infusion chamber is sized and shaped depending on the capsule or pod to be accommodated.

In other terms, an infusion machine with capsules or pods can operate with only one type of capsules or pods, specifically of the type the infusion chamber has been designed for.

Usually, for example only for coffee, each coffee producer/vendor has its own type of capsule or pod and, consequently, there is a machine having an infusion chamber intended for accommodating the capsule or pod only of that specific coffee producer/vendor.
Moreover, some aromatic substances for producing infused beverages different from coffee, are contained in capsules having shapes and size different from coffee capsules, and therefore they can not be used in machines whose infusion chamber has been specifically designed for accommodating the capsule of a specific coffee producer/vendor.
Therefore, the Applicant found the need of overcoming the restrictions of machines and infusion assemblies of the known art, which provide an infusion chamber adapted to accommodate only a predetermined type of pod or capsule for making infused beverages.
Known infusion assemblies are for example described in documents US2013/133522, US59102015, US2013/263423, US2013/253526.
Hence, the Applicant dealt with the problem of making a machine for producing beverages infused from pods or capsules, usable with different typologies of pods and/or capsules.

### SUMMARY OF THE INVENTION

Therefore, in its first aspect the invention relates to infusion machine comprising the features of claim 1.

In the above said aspect, the present invention may have at least one of the hereinafter described characteristics.

Preferably, said at least one first infusing member comprises:- a supporting member; and-at least one containing portion comprising the accommodating recess for at least partially accommodating an infusion capsule or pod.

Conveniently, the containing portion is removably constrained to said supporting member.

Advantageously, the machine comprises releasable coupling members for removably fastening the first infusing member and the second infusing member to said machine.

Conveniently, the supporting member comprises:- an annular portion shaped to house the containing portion removably; and- a grip portion adapted to be grasped by the user in order to draw out at least the first infusing member from the machine and to put it back into the machine.

Preferably, the exchanger is realized in the upper portion of the machine so that the infusion chamber is supplied in a substantially direct way with hot water.

Conveniently, said at least one first infusing member comprises injection means for injecting water into the capsule or pod.

Advantageously, the injection means for injecting water comprise a plurality of holes for the water delivery.

Preferably, the injection means for injecting water comprise at least one piercing tip or needle.

Conveniently, the first infusing member comprises a bottom and/or side wall in which piercing and/or filtering means are obtained.

Advantageously, the piercing and/or filtering means comprise at least one sealing valve member provided on a bottom wall of said first infusing member; said sealing valve member being adapted to open to allow the passage of the infused beverage when the pressure of said beverage in the infusion chamber exceeds a prearranged threshold value.

Preferably, the piercing and/or filtering means comprise a plurality of grooves made on at least one side wall of said containing portion.

Conveniently, the piercing and/or filtering means comprise a plurality of piercing tips arranged on the bottom of said containing portion; each piercing tips being provided with a through duct for the infused beverage.

Advantageously, the plurality of piercing tips is arranged on a disc-shaped member removable with respect to the recess.

Preferably, the infusion assembly can comprise at least one side piercing device comprising:
- at least one piercing tip provided on a side wall of said first infusing member, said piercing tip being movable in a seat between a working position in which it pierces a side wall of the capsule and a rest position in which it is drawn away from the side wall of the capsule;
- at least one elastic member to bring back said at least one piercing tip to the rest position;
- at least one water duct communicating with said seat to supply pressurized water to said piercing tip and to cause the movement thereof from said rest position to said working position.

Further characteristics and advantages of the invention will be more evident from the detailed description of some preferred embodiments, but not exclusive, of a machine for infused beverages and an infusion assembly for making an infused beverage from a capsule or pod according to the present invention.

### BRIEF DESCRIPTION OF THE DRAWINGS

Such a description will be hereinafter explained referring to the attached drawings, provided for purposes of illustrations only, and thereby not limitative, wherein:
- figure 1 shows a schematic view of a machine for preparing an infused beverage with an infusion assembly according to the present invention, the latter having been removed from the accommodating recess;
- figures 2a; 2b; 2c are schematic views of a machine for preparing an infused beverage with an infusion assembly according to the present invention, in three different positions of the upper portion of the machine;
- figures 3a; 3b; 3c are side schematic views of three different embodiments of the infusion assembly according to the present invention with three different injection means for injecting water into the infusion chamber;
- figures 4a; 4b; 4c are side schematic views of three different embodiments of the first infusing member of the infusion assembly according to the present invention with three different bottom and/or side walls;
- figure 5 is a schematic perspective view of an alternative embodiment of the first infusing member of the infusion assembly according to the present invention;
- figure 6 is a schematic perspective view of an alternative embodiment of the first infusing member of the infusion assembly according to the present invention;
- figure 7 is a schematic perspective view of another alternative embodiment of the first infusing member of the infusion assembly according to the present invention; and
- figures 8a and 8b are two perspective views of another alternative embodiment of the first infusing member of the infusion assembly according to the present invention, with the containing portion placed in the supporting member and removed therefrom, respectively.

### DETAILED DESCRIPTION OF SOME EMBODIMENTS OF THE INVENTION

Referring to figures, an infusion assembly, in particular for machines 100 for preparing an infused beverage through a capsule 44 containing an aromatic substance, according to the present invention, is identified with the numeral reference 10.

The infusion assembly 10, as shown in figures, comprises a first infusing member 3 provided with a recess 4 and a second infusing member 5 coopering with the first infusing member to define, by coupling therewith, an infusion chamber 14.

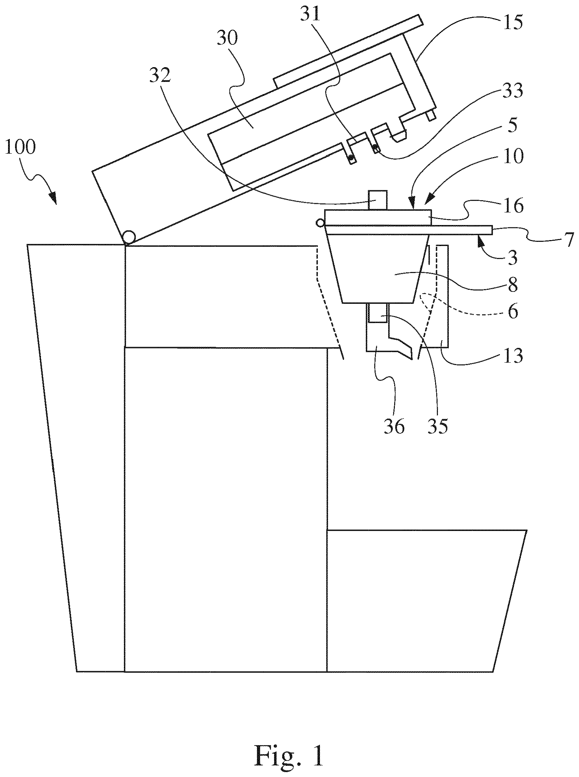

In the embodiment shown in figure 1, the first infusing member 3 can be housed in a lower portion 13 of the frame of the machine 100, whereas the second infusing member 5 can be housed in an upper portion 15 of the frame of the machine 100.

Furthermore, still referring to the embodiment shown in figure 1, the lower portion 13 of the frame of the machine is fixed, whereas the upper portion 15 of the frame of the machine is movable.

According to an embodiment not shown, the lower portion 13 of the frame of the machine is movable, whereas the upper portion 15 of the frame of the machine is fixed.

Returning to the embodiment shown in figure 1, the upper movable portion 15 is movable between a working position in which it cooperates with the lower fixed portion 13 to define, by coupling therewith, an accommodating seat 6 to accommodate the infusion assembly and a second position in which the upper movable portion 15 is drawn away from the lower fixed portion 13, the accommodating seat 6 for the infusion assembly 10 still having the access open.

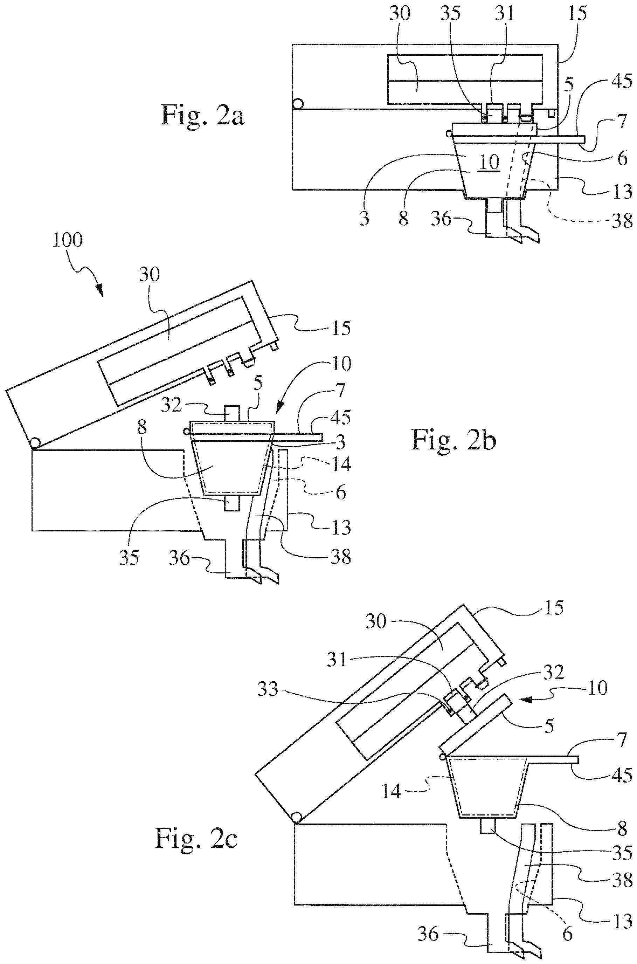

In figures 2a to 2c the movement of the upper movable portion 15, from the working position (fig. 2a) to the second position (fig. 2c) is shown sequentially.

In the embodiment shown in figures 1-2c, the upper movable portion 15 is hinged to the lower fixed portion 13.

In the embodiment shown in figures, the upper movable portion 15 has further an exchanger 30; in this way, differently from conventional machines, the infusion chamber is supplied by hot water almost directly, i.e. without long ducts involving heat loss.

According to this alternative embodiment, the exchanger 30 has an outlet duct 31 of water adapted to cooperate with an inlet shank 32 placed on an adapter 1, hereinafter described more in detail.
Between the afore said water outlet duct 31 and the inlet shank 32 sealing members are provided, such as annular sealing members 33.
In an alternative embodiment, the lower portion 13 of the frame of the machine is movable, whereas the upper portion 15 of the frame of the machine is fixed.
In both embodiments, the accommodating seat 6 is sized to house an infusion assembly adapted to contain a capsule 44 or a pod for making an infused beverage. The infusion assembly 10 can be removably inserted into the accommodating seat 6 of the infusion assembly.
The infusion assembly 10, hereinafter described more in detail, has an outer shape, or a portion thereof, suitable for coupling with the accommodating seat 6 of the infusion assembly, whereas inside it is shaped depending on the type or size of the capsule or pod to be accommodated.
In other words, in the seat 6 each machine 100 can accommodate different typologies of infusion assemblies 1, each sized and shaped in its inside to accommodate a different type or size of pod or capsule. Therefore, a plurality of infusion assemblies 10 according to the present invention can be combined with the accommodating seat 6.
According to the embodiment shown in figures 1-3c, the first infusing member 3 is constrained to the second infusing member 5 so that the infusion chamber 14 can be hermetically opened or closed for the insertion of an infusion capsule or pod.
Alternatively, the first infusing member 3 could be not-constrained to the second infusing member 5, the first and the second infusing member couple in the machine to implement the infusion chamber 14.
Differently from the machines according to the known art, the infusion chamber implemented in the infusion assembly 10 is removable from the machine 100.
The first infusing member 3, in the embodiments shown in figures, comprises a supporting member 7 and a containing portion 8 comprising said accommodating recess 4 for at least partially accommodating an infusion capsule or pod. The containing portion 8 has a substantially cylindrical or truncated-conical body, whereas the supporting member 7 extends from the containing portion. In the embodiments shown in figures 1-7, the supporting member 7 is constrained rigidly to the containing portion 8.

The second infusing member 5 has a cylindrical shape adapted to cooperate with the lid-like shape of the first infusing member 3, to implement the infusion chamber 14.

Preferably, the second infusing member 5 is hinged to the first infusing member 3 so that to be rotatable between a lowered position, shown in figure 2b for example, and an opening position, shown in figure 2c for example, of the infusion chamber 14.

In the lowered position the second infusing member 5, moving closer to the first infusing member 3, closes the infusion chamber 14 hermetically.

To such a purpose, annular sealing members 19 are present too as interposed between said first infusing member 3 and said second infusing member 5.

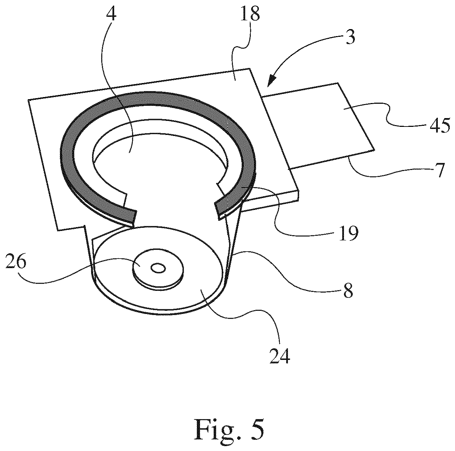

In the embodiment shown in figure 5, the first infusing member 3 has an upper peripheral edge 18 extending outside the recess 4 in a plane substantially horizontal with respect to the vertical axis of the adapted 1.

In such an embodiment, there is the annular sealing member 19 arranged concentrically outside the recess 4, the first being represented by an O-ring and arranged in an appropriate annular seat obtained on the upper peripheral edge 18.

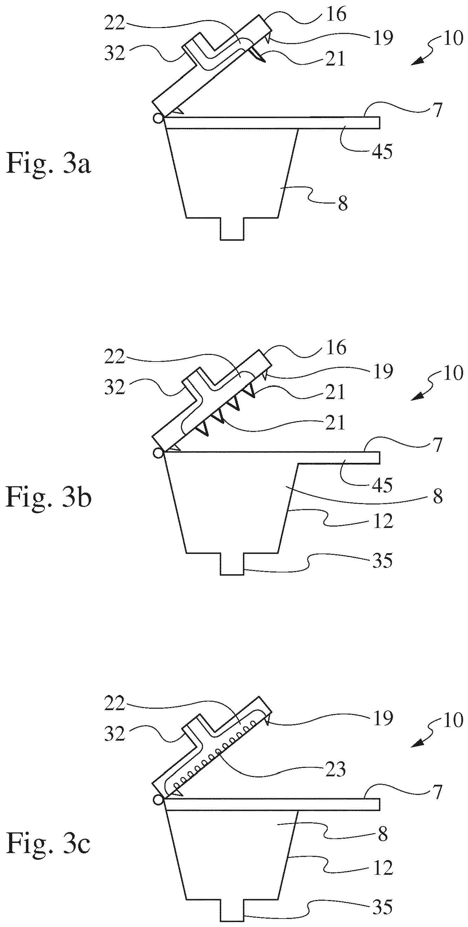

Alternatively, as shown in figures 3a-3c, the annular sealing members 19 can be arranged in an appropriate groove obtained on the second infusing member 5.

According to an aspect of the invention, the second infusing member 5 comprises injection means for injecting water into the chamber 14 and, consequently, into the capsule or pod 44.

Injection means for injecting water into the chamber 14 can have various shapes and size depending on the type of used capsule or pod 44 and on the different used technique of infusion.

In figure 3a there is a second infusing member 5 with injection means 17 for injecting water inside the infusion chamber 14 for capsules containing a soluble material.

In this case, the injection means for injecting water inside the chamber 14 are represented by a single needle 21, an inflow duct 22 and an inlet shank 32 fluidically connected with the inflow duct 22 and with the outside of the infusion assembly 10.

The single needle 21 is hollow and fluidically connected with the inflow duct 22. The needle 21 pierces the upper portion of the capsule to allow hot water to be injected for the capsule infusion. The single needle 21 allows a higher pressure of water exiting from the inside of the capsule and, consequently, aids the dissolution of the soluble material contained in the capsule.

In figure 3b there is a second infusing member 5 with injection means for injecting water inside the capsule chamber 14 for making a coffee.

More in detail, in this implementation, the injection means 17 for injecting water inside the chamber 14 are represented by a plurality of needles 21, an inflow duct 22 and an inlet shank 32 fluidically connected with the inflow duct 22 and with the outside of the infusion assembly.

The needles 21 are fluidically connected with the inflow duct 22, which is truly responsible for injecting water into the capsule, for this purpose being widened thereby taking a dome-like shape in the section next to the needles 21.

The capsules for making coffee need, as a matter of fact, to be pierced in several points on their upper surface in order to guarantee a greater exchange surface between hot water and coffee.

In figure 3c there is a second infusing member 5 with injection means 17 for injecting water inside the capsule chamber 14, the capsules having a filter paper on the upper surface. In this case, tips or needles piercing the capsule are not necessary, instead there is the need of a plurality of holes 23 for a more homogeneous water delivery, the plurality of holes 23 being connected to the water inflow duct 22 that, for this purpose, is widened thereby taking a section having a dome-like shape next to the holes 23. The inflow duct 22 is connected on top with an inlet shank 32 connected with the outside of the infusion assembly 10.

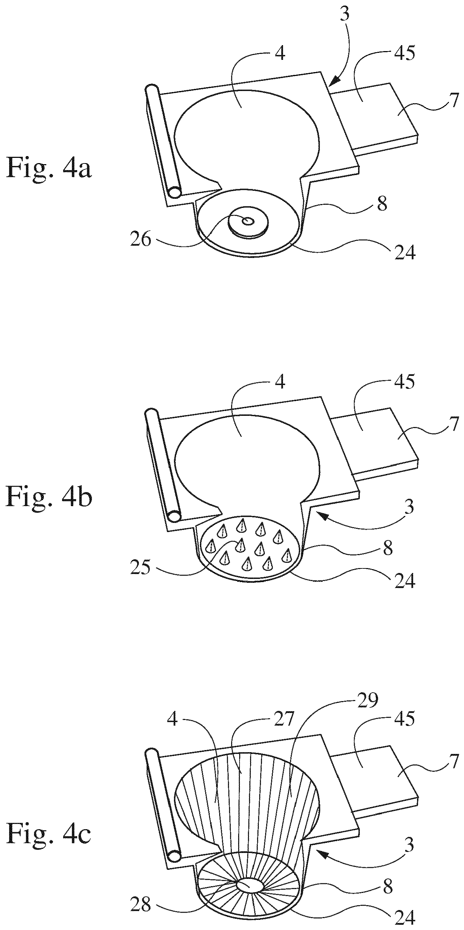

In figures 4a, 4b, 4c first infusing members 3 are shown, which have a bottom and/or side wall in which different piercing and/or filtering means are obtained, for example a plurality of piercing tips 25, as shown in figure 4b, for the use of an infusion assembly 10 with capsules or pods made of papery material or anyway without holes on the second infusing member 5.

The piercing tips 25, arranged on the bottom the containing portion of the first infusing member 3, have a vertical extent lower than 0.1% of the depth of the recess 4. Each piercing tip 25 is provided with a through duct for the infused beverage. The through duct has such a size so that the coffee powder cannot pass, on the contrary the infused beverage can pass and exit from the infusion chamber 4. Each piercing tip 25 has a tapered shape in an inner direction of the recess 4. Advantageously, in order to allow a better cleaning inside the recess 4, the plurality of piercing tips 25 is arranged on a disc-shaped member removable with respect to the recess 4 itself and the bottom 24 of the containing portion.

In figure 4a, a first infusing member 3 is illustrated by way of example and provided with a bottom wall 24 having a sealing valve member 25 at an outlet hole for the beverage, the outlet hole being provided on the bottom of the bottom wall 24.

The sealing valve member 25 is adapted to open in order to allow the infused beverage to pass when the pressure of the beverage itself, in the second infusing member 3, exceeds a predefined threshold value.

The presence of such a sealing valve member 25 concurs in improving the mixing of the aromatic substance with the infusion liquid and, hence, the beverage quality.

In figure 4a, a first infusing member 3 is illustrated by way of example and provided with a bottom wall 24 and a side wall 27 provided with a plurality of grooves starting from the outlet hole 28 for the beverage, the outlet hole still being provided on the bottom of the bottom wall 24, and the grooves extend on the side wall 27 up to the outer edge 18.

The grooves 29 extend radially on the bottom wall 24 from the hole 28 and extend as angularly spaced along the whole side wall 27.

The grooves 29 allow the infusion assembly 10 to correctly operate with the use of capsules having an envelope made of filtering cellulose. If the afore said grooves 29 are not present, the capsule having an envelope made of filtering cellulose would adhere perfectly to the side wall 27 and the bottom wall 24, thereby not allowing a correct beverage delivery.

Alternatively, the grooves can be provided only at the side wall 27 of the first infusing member 3.

The infusion assembly 10, and in particular the second infusing member 3, have a short outlet duct 35 for the beverage, placed in fluidic communication with the inside of the infusion chamber 14.

The outlet duct 35 for the beverage is connected with a hopper 36 removably constrained with the infusion assembly 10, as shown in figure 1.

The hopper 36 is inserted in a counter-shaped portion of the machine 100.

Alternatively, the outlet duct 35 for the beverage couples with a fixed hopper (shown by way of example in figures 2a-2c) made on the machine 100 at the bottom of the seat 6, during the insertion of the adapter into the accommodating seat 6.

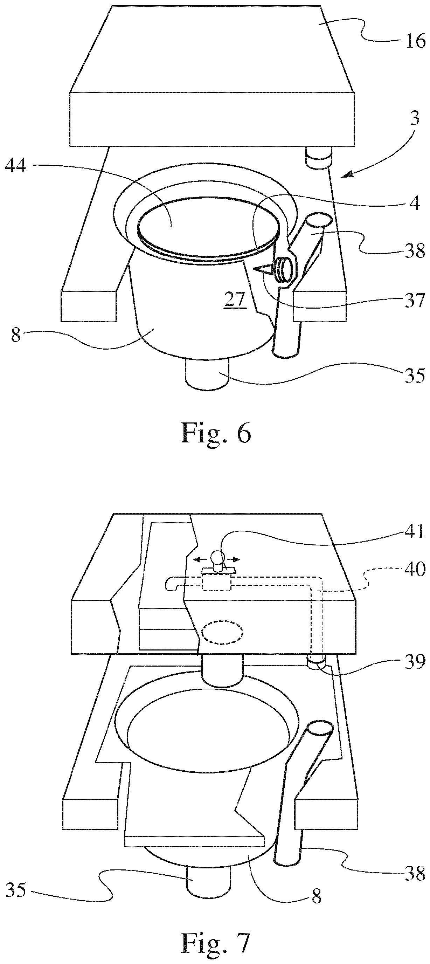

According to another alternative embodiment, shown in figure 6, the infusion assembly 10 has at least one side piercing device for piercing the capsule 44.

The piercing device comprises at least one piercing tip 37 provided on the side wall 27 of the first infusing member 3.

The piercing tip 37 is movable in a seat between a working position, in which it pierces from the outside the side wall of the capsule 44 contained in the infusion chamber 14, and a rest position in which it is drawn away from the side wall of the capsule 44.

By piercing the side wall of the capsule 44 in the infusion chamber 14, the beverage infusion is allowed.

The piercing tip 37 is moved towards the working position by the pressurized water supplied to the head of the piercing tip by a duct 38 for hot water, which is obtained in the side wall of the first infusing member 3 of the infusion assembly 10 and in communication with a duct for hot water made in the machine and passing through the exchanger 30.

Moreover, the piercing device has at least one elastic member, not shown in figure, to bring back said at least one piercing tip 37 to the rest position.

When the pressure of water in the duct 38 exceeds a predetermined threshold value, it pushes the piercing tip towards the outside of the first infusing member 3, thereby piercing the capsule 4.

Vice versa, when the pressure drops, the piercing tip 37 returns to the rest position by the elastic member.

The piercing tip 37 is hollow and has, in its inside, a duct for the water passage to allow the beverage infusion.

According to an alternative embodiment of the adapter 1 according to the present invention, shown in figure 7, there is a duct 38 bypassing the infusion chamber 14.

The duct 38 is connected on top with a duct 40 of the machine 100, provided with a male member 39 adapted to be inserted into the duct 38 for implementing a fluidic communication.

Through a selector 41 placed on the duct 40 and mechanically or electrically driven, such as for example an electrovalve, the water can be bypassed so that it would not pass through the infusion chamber 14 but outside it, thereby allowing the extraction of hot water from the machine 100 without contamination of beverage remains.

In an alternative embodiment, the infusion assembly 10 has means releasably coupling with the seat 6 of the machine and, in particular, with the upper and lower portions.

The infusion assembly 10 can have interlocked coupling means adapted to be engaged removably in the lower fixed portion 13 or the upper movable portion 15.

By way of example, the infusion assembly 10 can have, in the first infusing member 3 and particularly on the side wall of the latter, at least one undercut adapted to be engaged with teeth obtained in the accommodating seat 6.

Alternatively, the infusion assembly 10 can have, on its first infusing member 3, radial juts adapted to be engaged in corresponding seats obtained in the accommodating seat 6.

Alternatively, the coupling means can be represented by a portion of the adapter, or the whole thereof, shaped to be simply rested to size in the accommodating seat 6.

According to another embodiment, the coupling means can be represented by hooks provided on the second infusing member 5 adapted to be engaged with corresponding openings obtained in the upper movable portion 15.

In the embodiments shown in figures, the infusion assembly 10, and in particular the first infusing member 3, has a grip member 45 extending along a radial direction from the edge 18, in order to aid the extraction and the insertion of the adapted itself with respect to the accommodating seat 6.

According to another embodiment, sealing means can be provided as interposed between the adapter and a portion of the machine.

By way of example, an annular sealing member, such as an O-ring, can be provided outside the first infusing member 3, in detail at the back of the edge 18, and the lower fixed portion 13 can be provided radially, outside the recess 4.

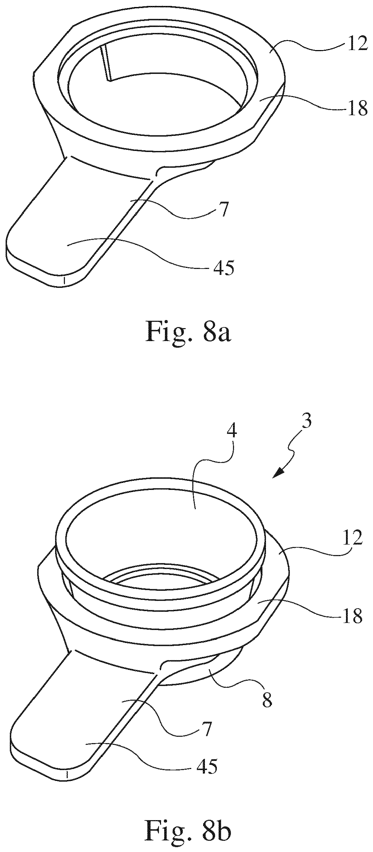

In figures 8a and 8b another alternative embodiment is shown of the first infusing member 3 of the infusion assembly 10 according to the present invention, with the containing portion 8 placed in the supporting member 7 and removed therefrom, respectively.

According to this embodiment, the first infusing member 3 is implemented so that the containing portion 8 can be removed from the supporting member 7.

According to this embodiment, the supporting member 7 comprises:
- an annular portion 12 shaped to removably house the containing portion 8; and
- a grip portion 45 adapted to be grasped by the user in order to draw out at least the first infusing member from the machine and to put it back into the machine.

The annular portion 12 is sized to be coupled with a containing portion 8. Different containing portions 8 for the same annular portion can be provided, each being adapted for accommodating a capsule or pod different for type or size. For this purpose, the containing portions 8 have the same size and outer shape, but a different conformation of the inner recess 4.

Advantageously, the infusion assembly 10 according to the present invention makes the machine for producing beverages infused from pods or capsules, usable with different typologies of pods and/or capsules.

Another advantage of the removable or extractable infusion assembly 10 according to the present invention is that all its members can be washed easily, most of all the tips or infusion members tending to clog during the life cycle; in fact, this activity cannot be made on conventional machines, in which the infusion tips are made as fixed on the machine.

To the embodiments herein represented in detail various modifications can be made, anyway remaining in the protection scope of the invention, defined by the following claims.

## Claims

1. Infusion machine (100) comprising:
- at least one lower portion (13); and
- at least one upper portion (15);
- at least one first infusion assembly (10) comprising:
- a first infusing member (3), comprising a recess (4) adapted for accommodating at least partially a capsule or pod,
- a second infusing member (5), adapted for cooperating with said first infusing member (3) so as to at least partially close said recess (4) to define an infusion chamber (14) with said first infusing member;
- said first infusing member (3) is removable with respect to said lower portion (13) in order to be replaced by a first infusing member (3) adapted for housing a different capsule or pod;
- said second infusing member (5) comprises an outer and upper part provided with an inlet through-shank (32) allowing the hot water to be introduced into the infusion chamber (14); and said first infusing member (3) comprises a bottom wall provided with an outlet duct (35) for the infused beverage **characterized in that**: at least one heat exchanger (30) is placed at said infusion assembly (10)
- said exchanger (30) comprises a water outlet duct (31) adapted to cooperate with the inlet shank (32) of the second infusing member (5);
- between said water outlet duct (31) and the inlet shank (32) a sealing member is provided, such as annular sealing member (33).

2. Infusion machine (100) according to claim 1, **characterized in that** said at least one first infusing member (3) comprises:
- a supporting member (7); and
- at least one containing portion (8) comprising said accommodating recess (4) for at least partially accommodating an infusion capsule or pod.

3. Infusion machine (100) according to claim 1 or 2, **characterized in that** said containing portion (12) is removably constrained to said supporting member.

4. Infusion machine (100) according to claim 1 or 2, **characterized by** comprising releasable coupling members for removably fastening said first infusing member (3) and said second infusing member (5) to said machine (100).

5. Infusion machine (100) according to claim 2, **characterized in that** said supporting member (8) comprises:
- an annular portion (12) shaped to house said containing portion (8) removably; and
- a grip portion (45) adapted to be grasped by the user in order to draw out at least said first infusing member (3) from the machine and to put it back into the machine.

6. Infusion machine (100) according to any one of claims 1 to 5, **characterized in that** said exchanger (30) is realized in the upper portion (15) of the machine so that the infusion chamber (14) is supplied in a substantially direct way with hot water.

7. Infusion machine (100) according to any one of claims 1 to 6, **characterized in that** said at least one first infusing member (3) comprises injection means for injecting water into the capsule or pod.

8. Infusion machine (100) according to claim 7, **characterized in that** said injection means for injecting water comprise a plurality of holes (23) for the water delivery.

9. Infusion machine (100) according to claim 7, **characterized in that** said injection means for injecting water comprise at least one piercing tip or needle (21).

10. Infusion machine (100) according to any one of claims 1 to 9, **characterized in that** said first infusing member (3) comprises a bottom and/or side wall (24) in which piercing and/or filtering means are obtained.

11. Infusion machine (100) according to claim 10, **characterized in that** said piercing and/or filtering means comprise at least one sealing valve member (26) provided on a bottom wall (24) of said first infusing member (3); said sealing valve member (26) being adapted to open to allow the passage of the infused beverage when the pressure of said beverage in the infusion chamber (14) exceeds a prearranged threshold value.

12. Infusion machine (100) according to claim 11, **characterized in that** said piercing and/or filtering means comprise a plurality of grooves (29) made on at least one side wall (27) of said containing portion (12).

13. Infusion machine (100) according to claim 11, **characterized in that** said piercing and/or filtering means comprise a plurality of piercing tips (25) arranged on the bottom of said containing portion (8); each piercing tips being provided with a through duct for the infused beverage.

14. Infusing machine (100) according to claim 12 or 13, **characterized in that** said plurality of piercing tips is arranged on a disc-shaped member removable with respect to the recess (4).

15. Infusion machine (100) according to any one of preceding claims 1 to 14, **characterized by** comprising at least one duct (38) bypassing said infusion chamber (14).

## Patentansprüche

1. Aufgussmaschine (100) umfassend:
- mindestens einen unteren Teil (13); und
- mindestens einen oberen Teil (15);
- mindestens eine erste Aufgussanordnung (10), umfassend:
- ein erstes Aufgusselement (3), umfassend eine Ausnehmung (4), welche dazu eingerichtet ist, eine Kapsel oder ein Pad zumindest teilweise aufzunehmen,
- ein zweites Aufgusselement (5), eingerichtet zum Zusammenwirken mit dem ersten Aufgusselement (3) derart, dass es die Ausnehmung (4) zumindest teilweise schließt, um mit dem ersten Aufgusselement eine Aufgusskammer (14) zu definieren;
- wobei das erste Aufgusselement (3) bezüglich des unteren Teils (13) abnehmbar ist, um durch ein erstes Aufgusselement (3) ersetzt zu werden, welches zum Unterbringen einer anderen Kapsel oder eines anderen Pads eingerichtet ist;
- wobei das zweite Aufgusselement (5) einen äußeren und oberen Bestandteil umfasst, welcher mit einem Einlass-Durchgangsschaft (32) versehen ist, der das Einführen von heißem Wasser in die Aufgusskammer (14) ermöglicht; und wobei das erste Aufgusselement (3) eine mit einem Auslasskanal (35) für das Aufgussgetränk versehene Bodenwand aufweist, **dadurch gekennzeichnet, dass**:
mindestens ein Wärmetauscher (30) an der Aufgussanordnung (10) angeordnet ist:
- wobei der Wärmetauscher (30) einen Wasserauslasskanal (31) umfasst, der zum Zusammenwirken mit dem Einlassschaft (32) des zweiten Aufgusselements (5) eingerichtet ist;
- wobei zwischen dem Wasserauslasskanal (31) und dem Einlassschaft (32) ein Dichtungselement, beispielsweise ein ringförmiges Dichtungselement (33), bereitgestellt ist.

2. Aufgussmaschine (100) gemäß Anspruch 1, **dadurch gekennzeichnet, dass** das mindestens eine erste Aufgusselement (3) umfasst:
- ein Stützelement (7); und
- mindestens einen Behälterteil (8) umfassend die aufnehmende Ausnehmung (4) zum mindestens teilweisen Aufnehmen einer Aufgusskapsel oder eines Aufguss-Pads.

3. Aufgussmaschine (100) gemäß Anspruch 1 oder 2, **dadurch gekennzeichnet, dass** der Behälterteil (12) abnehmbar am Stützelement befestigt ist.

4. Aufgussmaschine (100) gemäß Anspruch 1 oder 2, **dadurch gekennzeichnet, dass** sie lösbare Verbindungselemente zur abnehmbaren Befestigung des ersten Aufgusselements (3) und des zweiten Aufgusselements (5) an der Maschine (100) umfasst.

5. Aufgussmaschine (100) gemäß Anspruch 2, **dadurch gekennzeichnet, dass** das Stützelement (8) umfasst:
a. einen ringförmigen Abschnitt (12), der so geformt ist, dass er den Behälterteil (8) entfernbar aufnimmt; und
b. einen Griffabschnitt (45), welcher dazu ausgebildet ist, vom Verwender ergriffen zu werden, um mindestens das erste Aufgusselement (3) aus der Maschine herauszuziehen und es wieder in die Maschine einzusetzen.

6. Aufgussmaschine (100) gemäß einem der Ansprüche 1 bis 5, **dadurch gekennzeichnet, dass** der Austauscher (30) im oberen Teil (15) der Maschine angeordnet ist, so dass die Aufgusskammer (14) auf einem im Wesentlichen direkten Weg mit heißem Wasser versorgt wird.

7. Aufgussmaschine (100) gemäß einem der Ansprüche 1 bis 6, **dadurch gekennzeichnet, dass** das mindestens eine erste Aufgusselement (3) Einspritzmittel zum Einspritzen von Wasser in die Kapsel oder das Pad umfasst.

8. Aufgussmaschine (100) gemäß Anspruch 7, **dadurch gekennzeichnet, dass** die Einspritzmittel zum Einspritzen von Wasser eine Vielzahl von Löchern (23) für die Wasserführung umfassen.

9. Aufgussmaschine (100) gemäß Anspruch 7, **dadurch gekennzeichnet, dass** die Einspritzmittel zum Einspritzen von Wasser mindestens eine Durchstechspitze oder -nadel (21) umfassen.

10. Aufgussmaschine (100) gemäß einem der Ansprüche 1 bis 9, **dadurch gekennzeichnet, dass** das erste Aufgusselement (3) eine Boden- und / oder Seitenwand (24) aufweist, in welcher Durchstech- und/oder Filtermittel enthalten sind.

11. Aufgussmaschine (100) gemäß Anspruch 10, **dadurch gekennzeichnet, dass** die Durchstich- und/oder Filtermittel mindestens ein an einer Bodenwand (24) des ersten Aufgusselements (3) bereitgestelltes Dichtungsventilelement (26) umfassen; wobei das Dichtungsventilelement (26) dazu eingerichtet ist, sich zum Ermöglichen des Durchflusses des Aufgussgetränks zu öffnen, wenn der Druck des Getränks in der Aufgusskammer (14) einen vorbestimmten Schwellenwert überschreitet.

12. Aufgussmaschine (100) gemäß Anspruch 11, **dadurch gekennzeichnet, dass** die Durchstech- und/oder Filtermittel eine Vielzahl von Rillen (29) umfassen, welche an mindestens einer Seitenwand (27) des Behälterteils (12) ausgebildet sind.

13. Aufgussmaschine (100) gemäß Anspruch 11, **dadurch gekennzeichnet, dass** die Durchstech- und/oder Filtermittel eine Vielzahl von Durchstechspitzen (25) umfassen, welche am Boden des Behälterteils (8) angeordnet sind; wobei jede Durchstechspitze mit einem Durchtrittskanal für das Aufgussgetränk versehen ist.

14. Aufgussmaschine (100) gemäß Anspruch 12 oder 13, **dadurch gekennzeichnet, dass** die Vielzahl von Durchstechspitzen auf einem scheibenförmigen, bezüglich der Ausnehmung (4) entfernbaren Element angeordnet ist.

15. Aufgussmaschine (100) gemäß einem der vorhergehenden Ansprüche 1 bis 14, **dadurch gekennzeichnet, dass** sie mindestens einen die Aufgusskammer (14) umgehenden Kanal (38) umfasst.

## Revendications

1. Machine d'infusion (100) comprenant :
- au moins une portion inférieure (13) ; et
- au moins une portion supérieure (15) ;
- au moins un premier ensemble infusion (10) comprenant :
- un premier organe infuseur (3), comprenant un évidement (4) adapté pour accueillir au moins partiellement une capsule ou une dosette,
- un second organe infuseur (5), adapté pour coopérer avec ledit premier organe infuseur (3) de façon à fermer au moins partiellement ledit évidement (4) pour définir une chambre d'infusion (14) avec ledit premier organe infuseur ;
- ledit premier organe infuseur (3) est amovible par rapport à ladite portion inférieure (13) afin d'être remplacé par un premier organe infuseur (3) adapté pour loger une capsule ou une dosette différente ;
- ledit second organe infuseur (5) comprend une partie externe et supérieure pourvue d'une tige traversante d'admission (32) permettant d'introduire l'eau chaude dans la chambre d'infusion (14) ;
et ledit premier organe infuseur (3) comprend une paroi de dessous pourvue d'un conduit de refoulement (35) pour la boisson infusée
**caractérisée en ce que** : au moins un échangeur de chaleur (30) est placé au niveau dudit ensemble infusion (10) ;
- ledit échangeur (30) comprend un conduit de refoulement d'eau (31) adapté pour coopérer avec la tige d'admission (32) du second organe infuseur (5) ;
- entre ledit conduit de refoulement d'eau (31) et la tige d'admission (32) est pourvu un organe d'étanchement, tel qu'un organe d'étanchement annulaire (33).

2. Machine d'infusion (100) selon la revendication 1, **caractérisée en ce que** ledit au moins un premier organe infuseur (3) comprend :
- un organe de support (7) ; et
- au moins une portion de confinement (8) comprenant ledit évidement d'accueil (4) pour accueillir au moins partiellement une capsule ou une dosette d'infusion.

3. Machine d'infusion (100) selon la revendication 1 ou 2, **caractérisée en ce que** ladite portion de confinement (12) est contrainte de manière amovible audit organe de support.

4. Machine d'infusion (100) selon la revendication 1 ou 2, **caractérisée en ce qu'**elle comprend des organes de couplage libérables pour arrimer de manière amovible ledit premier organe infuseur (3) et ledit second organe infuseur (5) à ladite machine (100).

5. Machine d'infusion (100) selon la revendication 2, **caractérisée en ce que** ledit organe de support (8) comprend :
- une portion annulaire (12) conformée pour loger ladite portion de confinement (8) de manière amovible ; et
- une portion de poignée (45) adaptée pour être saisie par l'utilisateur afin de retirer au moins ledit premier organe infuseur (3) de la machine et de le replacer dans la machine.

6. Machine d'infusion (100) selon l'une quelconque des revendications 1 à 5, **caractérisée en ce que** ledit échangeur (30) est réalisé dans la portion supérieure (15) de la machine de sorte que la chambre d'infusion (14) soit alimentée en eau chaude de manière sensiblement directe.

7. Machine d'infusion (100) selon l'une quelconque des revendications 1 à 6, **caractérisée en ce que** ledit au moins un premier organe infuseur (3) comprend des moyens d'injection pour injecter de l'eau dans la capsule ou la dosette.

8. Machine d'infusion (100) selon la revendication 7, **caractérisée en ce que** lesdits moyens d'injection pour injecter de l'eau comprennent une pluralité de trous (23) pour la livraison d'eau.

9. Machine d'infusion (100) selon la revendication 7, **caractérisée en ce que** lesdits moyens d'injection pour injecter de l'eau comprennent au moins un embout ou une aiguille de perçage (21).

10. Machine d'infusion (100) selon l'une quelconque des revendications 1 à 9, **caractérisée en ce que** ledit premier organe infuseur (3) comprend une paroi de dessous et/ou de côté (24) dans laquelle des moyens de perçage et/ou de filtration sont obtenus.

11. Machine d'infusion (100) selon la revendication 10, **caractérisée en ce que** lesdits moyens de perçage et/ou de filtration comprennent au moins un organe formant vanne d'étanchement (26) pourvu sur une paroi de dessous (24) dudit premier organe infuseur (3) ; ledit organe formant vanne d'étanchement (26) étant adapté pour s'ouvrir pour permettre le passage de la boisson infusée lorsque la pression de ladite boisson dans la chambre d'infusion (14) dépasse une valeur seuil préétablie.

12. Machine d'infusion (100) selon la revendication 11, **caractérisée en ce que** lesdits moyens de perçage et/ou de filtration comprennent une pluralité de rainures (29) pratiquées sur au moins une paroi de côté (27) de ladite portion de confinement (12).

13. Machine d'infusion (100) selon la revendication 11, **caractérisée en ce que** lesdits moyens de perçage et/ou de filtration comprennent une pluralité d'embouts de perçage (25) agencés sur le fond de ladite portion de confinement (8) ; chaque embout de perçage étant pourvu d'un conduit traversant pour la boisson infusée.

14. Machine d'infusion (100) selon la revendication 12 ou 13, **caractérisée en ce que** ladite pluralité d'embouts de perçage est agencée sur un organe en forme de disque amovible par rapport à l'évidement (4).

15. Machine d'infusion (100) selon l'une quelconque des revendications 1 à 14, **caractérisée en ce qu'**elle comprend au moins un conduit (38) contournant ladite chambre d'infusion (14).
